# EUROPÄISCHE PATENTSCHRIFT

(11) **EP 0 870 595 B1**
(45) Veröffentlichungstag und Bekanntmachung des Hinweises auf die Patenterteilung: **13.11.2002**
(21) Anmeldenummer: 98106324.1
(22) Anmeldetag: 07.04.1998
(51) Int. Cl.: B29D 30/44, C08J 3/28

(54) **Verfahren zur Herstellung eines Rohlings für Fahrzeugreifen**
Process for manufacturing a preform for vehicle tyres
Procédé de fabrication d'une ébauche pour pneumatiques

(30) Priorität: 11.04.1997 DE 19715296
(43) Veröffentlichungstag der Anmeldung: 14.10.1998
(73) Patentinhaber: Continental Aktiengesellschaft, 30165 Hannover (DE)
(72) Erfinder: Homt, Günter, 30823 Garbsen (DE); Glinz, Michael, 31535 Neustadt (DE); Kunz, Harry, 30419 Hannover (DE)

(56) Entgegenhaltungen:
- EP-A- 0 451 425
- EP-A- 0 788 870
- DE-A- 3 145 014
- DATABASE WPI Week 9521 Derwent Publications Ltd., London, GB; AN 95-158605 XP002115325 & JP 07 081306 A (SUMITOMO), 28. März 1995 (1995-03-28)

## Beschreibung

Die Erfindung betrifft ein Verfahren zur Herstellung eines Rohlings für Fahrzeugreifen, der durch Konfektionierung verschiedener Reifenaufbauteile aus unvulkanisierter Kautschukmischung erzeugt wird, wobei die Reifenaufbauteile z.T. eingebettete Festigkeitsträger aufweisen. Ferner betrifft die Erfindung einen Rohling, der nach diesem Verfahren hergestellt wurde, sowie einen Fahrzeugreifen, der unter Verwendung des Rohlings hergestellt wurde.

Für die Konfektionierung von Fahrzeugreifen ist von wesentlicher Bedeutung, daß die unvulkanisierten Kautschukmischungen der einzelnen Schichten eine ausreichende Klebrigkeit besitzen, um einen Reifenrohling (Rohling, d.h. ein oder mehrere Aufbauteile des Reifens befinden sich im unvulkanisierten Zustand) herstellen zu können, der eine ausreichende Rohfestigkeit aufweist. Diese ist erforderlich, um'den Rohling unbeschadet von der Aufbaustation zur Vulkanisiereinrichtung zu transportieren. Des weiteren ist das Aneinanderhaften der einzelnen Kautschukmischungen während der Vulkanisation eine Voraussetzung, um dem fertigen Reifen die erforderliche Haltbarkeit verleihen zu können.

Bisher wurde die Konfektionsklebrigkeit der Kautschukmischungen in derart erhöht, daß diese mit Benzinlösung eingestrichen wurden und somit eine angelöste Oberflächenschicht auf dem Kautschukmaterial erzeugt wurde. Diese Behandlung mit einer Benzinlösung ist aber zeitaufwendig und stellt für die Arbeitskraft eine Gesundheitsgefährdung dar, bzw. muß durch aufwendige Absaugeinrichtungen gewährleistet werden, daß der MAK-wert nicht überschritten wird. Außerdem trat durch die Behandlung der Kautschukmischungen mit der dunklen Benzinlösung der Nachteil auf, daß z.B. Kautschukmischungen von farbigen Seitenwänden von Fahrzeugluftreifenrohlingen teilweise angelöst wurden, so daß im unvulkanisierten Zustand unschöne Verfärbungen der Seitenwände auftraten. Des weiteren wird auch nicht durch das Bestreichen des Kautschukmaterials mit Benzinlösung in jedem Falle eine ausreichende Konfektionsklebrigkeit erreicht. Insbesondere wenn zwei der unterschiedlichen Kautschukmischungen miteinander verbunden werden sollen, z.B. farbige Seitenwand mit der die Karkasse umgebene Kautschukmischung ergaben sich Probleme bezüglich einer ausreichenden Haftung in unvulkanisiertem Zustand, wodurch auch die Haftung im vulkanisiertem Zustand zu wünschen übrig ließ.

Die Aufgabe der vorliegenden Erfindung besteht darin, die Konfektionsklebrigkeit von Kautschukmischungen für die Herstellung von Fahrzeugreifen zu erhöhen, gleichzeitig aber auf Lösungsmittel wie z.B. Benzinlösung zu verzichten, um eine umweltverträgliche Herstellung von Fahrzeugreifen zu ermöglichen.

Gelöst wird diese Aufgabe erfindungsgemäß dadurch, daß zumindest teilweise die Oberfläche zumindest einer unvulkanisierten Kautschukmischung plasma- und/oder flammenbehandelt wird und diese behandelte Oberfläche mit der Oberfläche zumindest eines Reifenaufbauteiles aus einer Kautschukmischung in Kontakt gebracht wird.

Unter dem Terminus Plasmabehandlung soll die Einwirkung von durch Gasentladung entstandenen Teilchen, (z.B. radikale Ionen, Elektronen, Moleküle) auf eine Kautschukoberfläche verstanden werden, wobei die mittlere Temperatur der Oberfläche nicht über 100°C ansteigt. Bei der Plasmabehandlung wird im allgemeinen unterteilt in Niederdruckplasma und Normaldruckplasma. Bei dem Verfahren, das unter Verwendung eines Niederdruckplasmas abläuft, wird in einer Prozesskammer bei einem verringerten Druck (z.B. 0,5 bis 2 mbar) ein Gas oder Gasgemisch eingeleitet. Durch Anlegen einer hochfrequenten Wechselspannung wird eine Gasentladung (Plasma) gezündet, wobei das Gas in den ionisierten Zustand überführt wird. Als Gas kann z.B. Luft, Edelgase, Sauerstoff oder Stickstoff verwendet werden. Die entstandenen Fragmente des Gases oder des Gasgemisches treffen erfindungsgemäß auf die Oberflächen von unvulkanisierten Kautschukmischungen und bewirken deren Modifizierung. Je nach Verwendung des eingesetzten Gases bzw. Gasgemisches können z.B. polare Gruppen auf den im allgemeinen unpolaren Kautschuk aufgebracht werden. Das durch das Niederdruckplasma besitzt den Vorteil, daß sich im allgemeinen die behandelnde Kautschukoberfläche nur auf ca. 30 bis 60°C erwärmt, wodurch eine unbeschadete Behandlung der Oberfläche auch mit Materialien erfolgen kann, deren Aufbringung bei Normaldruck nicht möglich wäre. Des weiteren ist das Niederdruckplasmaverfahren sehr effektiv, da die Lebensdauer der aktiven Teilchen bei vermindertem Druck hoch ist. Aufgrund des abgeschlossenen Prozessraumes können definierte Gase oder Gasgemische zur Anwendung kommen. Des weiteren wird eine inhomogene oder unzureichende Aktivierung vermieden.

Als weiteres Verfahren zur Behandlung von unvulkanisierten Kautschukmischungen wird die Verwendung von Normaldruckplasmen angesehen. Im Unterschied zum Niederdruckplasmaverfahren findet die Gasentladung nicht in einem abgeschlossenen Raum statt, so daß dieses unter atmosphärischen Bedingungen wie Normaldruck und Luft arbeitet. Als bevorzugtes Verfahren findet die Korona-Entladung Anwendung.

Prinzipiell ist es auch möglich, die unvulkanisierte Kautschukoberfläche mit einem Hochtemperaturplasma zu behandeln. Allerdings ist dabei darauf zu achten, daß die Verweilzeit der Einwirkung des Plasmas so gewählt wird, daß die mittlere Oberflächentemperatur nicht über 100°C ansteigt.

Als weiteres Verfahren zur Behandlung von unvulkanisierten Kautschukschichten hat sich die Beflammung der Oberfläche bewährt. Z.B. werden bei der Verwendung einer Gasflamme an der Oberfläche des unvulkanisierten Kautschukmaterials aufgrund der Wärmeeinwirkung Molekülketten aufgebrochen und an diese Stellen werden in der Flamme enthaltende Sauerstoffbestandteile angebunden. Die Flammenbehandlung kann in Kombination (zeitlich nacheinander) mit der Plasmabehandlung erfolgen.

Bezüglich der Plasmabehandlung und der Flammenbehandlung wird an dieser Stelle auf folgende Literatur verwiesen.
1. Jörg Friedricht: Plasmabehandlung von Polymeren, Kleben & Dichten - Adhäsion, Jahrgang 41, 1-2/97, S. 28-33
2. Gehard Liebel: Plasmabehandlung von Polyolefinen, GAK 8/1990, S. 421ff.
3. Fritz Bloss: Zur Koronabehandlung von Formteilen, Sonderdruck aus Oberfläche + JOT 12/88 (Vorbehandeln)
4. Thomas H., Herrling. J., Rakowski W., Höcker, H.: Umweltfreundliche Veredlungsverfahren für Wolle durch Vorbehandlung mit elektrischen Gasentladungen (Plasmen), ITP 2/93, S. 42-49

Die Verwendung von Plasma- und Flammenbehandlung im Bereich von Produkten aus elastomeren Werkstoffen ist z. B. aus der JP 07 081306 bekannt. Dort wird zur Reduzierung des Reifengewichtes vorgeschlagen, dass ein Reifen eine gasdichte Innenschicht aus einem Vinylidenchlorid-Copolymer aufweist. Diese Innenschicht wird durch Aufsprühen einer Vinylidenchlorid-Emulsion auf die innere Oberfläche des bereits konfektionierten Rohreifens aufgesprüht, wobei die Oberfläche vorab einer KoronaBehandlung unterworfen wird. Die DE 31 45 014 A1 beschreibt, dass zur einfachen Vorbehandlung der Oberfläche eines Gummikörpers vor der Aufbringung eines Klebstoffes die Oberfläche des Elastomerkörpers eine Temperaturerhöhung, z. B. durch die Flamme eines Gasbrenners, erfährt. Weiterhin ist es aus der EP 0 451 425 A2 bekannt, dass die Festigkeitsträger, die für die Verstärkung von Gummiartikeln verwendet werden, plasmabehandelt werden. Durch diese Plasmabehandlung, die mit unterschiedlichen Plasmagasen durchgeführt werden kann, soll die Haftung des Textilcordes zum Gummi verbessert werden und die Anzahl der für eine ausreichende Haftung nötigen Prozessschritte und damit die Kosten verringert werden.

Durch die erfindungsgemäße Behandlung von unvulkanisierten Kautschukschichten wird es möglich, die Konfektionsklebrigkeit dieser Kautschukschichten zu verbessern. Dabei wurde festgestellt, daß sowohl die Konfektionsklebrigkeit der Kautschukmischung zu unvulkanisierten, vorvulkanisierten als auch ausvulkanisierten Reifenaufbauteilen erhöht wird. Demzufolge kann das erfindungsgemäße Verfahren z.B. auch für die Konfektionierung von runderneuerten Reifen (Aufbringung eines behandelten unvulkanisierten Laufstreifens) angewendet werden. Durch diese sehr einfach durchzuführenden Behandlungsmethoden kann umweltfreundlich, nämlich ohne den Einsatz von Lösungsmitteln, eine qualitätsgerechte Herstellung von Fahrzeugreifen erfolgen. Durch die Erhöhung der Konfektionsklebrigkeit können die Kautschukmischungen bzw. die Kautschukmischungen, die Festigkeitsträger eingebettet aufweisen, in einer definierten Lage aufgebracht werden, so daß auch nach der Vulkanisation des Rohlings ein Fahrzeugreifen erzielt wird, der aufgrund der exakten Lage der einzelnen Schichten verbesserte Laufeigenschaften aufweist. Überraschend dabei war festzustellen, daß bei einer Plasma- und/oder Flammenbehandlung der unvulkanisierten Kautschukmischungen diese so beeinflußt werden konnten, daß einerseits die Konfektionsklebrigkeit im Rohzustand (unvulkanisiert) erhöht werden konnte, aber gleichzeitig diese Behandlung keinen Einfluß auf das vernetzte (vulkanisiert) Material aufweist. Es war nicht zu erwarten, daß die Konfektionsklebrigkeit, die im Falle des unvernetzten Kautschuks, z.B. auf dessen ungesättigte Anteile, wie z.B. Öle zurückzuführen ist, durch das Aufbringen von in den meisten Fällen polaren Gruppen auf die Kautschukoberfläche erhöht wird. Durch die Modifikation der Oberfläche, die auch ein Verbrauch der Doppelbindungen zur Folge hat, hätte eigentlich eine Verringerung der Adhäsion erfolgen müssen. Es konnte erfindungsgemäß jedoch festgestellt werden, daß durch eine Plasmabehandlung und/oder Flammenbehandlung die Konfektionsklebrigkeit des Rohgummimaterials erhöht wird. Ein weiterer Vorteil der Erfindung liegt auch darin, daß die behandelte Oberfläche einer Kautschukmischungsschicht über längere Zeit (z. B. bis ca. 5 Tage) seine Klebrigkeit behält. Dadurch ist es nicht erforderlich, diese Kautschukmischungsschichten sofort weiterzuverarbeiten, was verarbeitungstechnische Vorteile bringt.

Der Plasma- und/oder Flammenbehandlung können unvulkanisierte Kautschukmischungen aus verschiedensten Materialien unterworfen werden. So können Mischungen, die als Kautschukkomponente z.B. Naturkautschuk (NR), Butadienkautschuk (BR), Styren-Butadien-Copolymer (SBR),Butylkautschuk, synthetisches Polyisopren, Ethylen-Propylen-Dien-Copolymer sowie weitere schwefelvernetzbare Kautschuke und Mischungen hieraus enthalten, der Behandlung unterzogen werden. Die genannten Kautschukmaterialien finden mit üblichen Zusatzstoffen versehen sowohl für die Herstellung von Vollgummireifen und auch für die Herstellung von Fahrzeugluftreifen Anwendung.

Besonders vorteilhaft ist, wenn zumindest der Teil der Oberfläche der Kautschukmischung plasmabehandelt und/oder flammenbehandelt wird, der den Endbereich der Kautschukmischung bildet, so daß bei einer Überlappung zweier Endbereiche zumindest eine plasmabehandelte und/oder flammenbehandelte Oberfläche mit der Oberfläche des anderen Endbereiches in Kontakt gebracht wird. Durch die Aufbringung von endlichen Kautschukschichten gleicher oder verschiedener Kautschukmaterialien bestand bisher das Problem, daß aufgrund mangelnder Konfektionsklebrigkeit dieser Überlappungsbereich nicht ausreichend aneinander haftet, so daß z.B. die sogenannten Spliceenden (Stoßstellenenden) nicht im ausreichenden Kontakt standen. Durch die Plasmabehandlung und/oder Flammenbehandlung zumindest einer Kautschukfläche, so daß beim Überlappen diese mit der anderen Kautschukschicht in Verbindung steht, wird es möglich, ein Aufreißen dieser Bereiche zu verhindern, wodurch eine qualitätsgesicherte Herstellung von Fahrzeugreifen erreicht wird.

Das erfindungsgemäße Verfahren bringt besondere Vorteile bei der Herstellung von Fahrzeugluftreifen. Dieser besitzt im allgemeinen Aufbau eine radial innenliegende luftundurchlässige Schicht, eine darüber befindlichen in Gummi gebettete Karkasse, die um die Wulstkerne geschlagen ist, einen Laufstreifen, der den Fahrzeugluftreifen radial außen begrenzt ein zwischen der Karkasse und dem Laufstreifen befindliches gummiertes Gürtelpaket und an seiner axialen Begrenzung aus Gummimaterial bestehende Seitenwände. Jedes einzelne Kautschukmaterial hat eine unterschiedliche Zusammensetzung, so daß durch die Anwendung des erfindungsgemäßen Verfahrens nun eine ausreichende Klebrigkeit zu den einzelnen Reifenaufbauteilen erzielt wird. Da auf zusätzliche Einstreichvorgänge, z.B. mit Benzinlösung verzichtet werden kann, können nun auch farbige Seitenwände, ohne durch dunkle Benzinlösung verschmutzt zu werden, sicher auf die im wesentlichen darunter befindliche Kautschukschicht der Karkasskordgummierung aufgebracht werden. Weiterhin ist es auch möglich, z.B. nicht schwarze Etiketten aus Kautschukmaterial, z.B. auf die Seitenwand aufzubringen. Damit wird sichergestellt, daß insbesondere kleine Etiketten an einer definierten Stelle angebracht werden können, wo sie sich nach der Vulkanisation auch noch befinden. Ein weiterer Vorteil bei der Herstellung von Fahrzeugluftreifen ergibt sich erfindungsgemäß dadurch, daß durch die Vermeidung des Einsatzes von benzinösen Lösungen der Aufbauprozess an der Wickeltrommel weiter automatisiert werden kann, da die Explosionsgefahr herabgesetzt werden kann. Außerdem ist es möglich, dynamisch besonders beanspruchte elastische Teile des Fahrzeugluftreifens vor der Vulkanisation einer Plasmaund/oder Flammenbehandlung zu unterwerfen. Insbesondere die axiale Begrenzung des Gürtels, der im allgemeinen aus metallischen Festigkeitsträgern besteht, die in Kautschuk gebettet sind, ist von dieser dynamischen Belastbarkeit besonders betroffen. So wird es erfindungsgemäß möglich, z.B. die Kautschukmischungen des Gürtels und der Karkasse mit dem erfindungsgemäßen Verfahren zu behandeln und somit die Gesamthaltbarkeit auch der nach der Vulkanisation des Reifens zuerhöhen. Ein weiteres Beispiel für die Anwendung des erfindungsgemäßen Verfahrens besteht darin, daß die in Kautschukschichten eingebettete Bandage, die anmeldungsgemäß zum Gürtelpaket zu fassen ist, im allgemeinen von einer Wickeltrommel gezogen wird, und anschließend auf den Gürtel aufgewickelt wird. Damit aber diese Spulbandage von der dafür vorgesehenen Wickeltrommel abgezogen werden kann, ist es erforderlich, daß die Kautschukmischungen, in denen die Bandage eingebettet ist, nicht klebrig sind. So ist es möglich vor dem Auflegen dieses Verbundes auf den Gürtel die Kautschukmaterialien der Bandage mit einem Plasma und/oder einer Flamme zu behandeln, so daß die Konfektionsklebrigkeit erst in diesem Stadium erhöht wird und ein optimaler Aufwickelvorgang dieser Bandage auf den Teilreifen ermöglicht wird, ohne daß aufgrund unzureichender Adhäsion zum Gürtel eine Verschlechterung der Qualität des Fahrzeugluftreifens eintritt.

Besonders vorteilhaft ist, wenn die Unterseite der Kautschukschicht des Laufstreifens plasma- und/oder flammenbehandelt ist. Insbesondere durch die unterschiedlichen Kautschukmischungen, die die Gürtelpaket-Kautschukmischung im Vergleich zur Kautschukmischung der Unterseite des Laufstreifens aufweist, ergaben sich Schwierigkeiten in einer ausreichenden Konfektionsklebrigkeit. Da diese erfindungsgemäß erhöht werden kann und gleichzeitig diese Erhöhung auch eine Verbesserung der Haftung des Laufstreifens im vulkanisierten Zustand mit sich bringt, wird nun die Gefahr der gefürchteten Laufstreifenablösung weitgehend verringert. Ein weiterer Vorteil bei der Behandlung des Laufstreifens mit einem Plasma und/oder einer Flamme besteht darin, daß die Stoßstellen (Überlappungsbereich) der beiden Enden der Kautschukmischung des Läufstreifens solch einer Behandlung unterzogen wird. Insbesondere bei Kieselsäure enthaltenden Laufstreifen, die dem Reifen im vulkanisierten Zustand einen geringenRollwiderstand und ein gutes Naßrutschverhalten verleihen, trat eine Öffnung dieses Splicebereiches ein. Erfindungsgemäß konnte dieses Problem beseitigt werden, so daß qualitativ hoch Reifen bereitgestellt werden können, die verfahrenstechnisch einfach und umweltverträglich hergestellt werden können.

Besonders bevorzugt ist, wenn als Plasmabehandlungsverfahren die Koronaentladung angewandt wird. Dieses Verfahren ist kostengünstig und mit apparativen geringem Aufwand zu bewerkstelligen.

Für die Korona-Entladung sind verschiedene Verfahrensweisen bekannt, wie z.B. die Hochfrequenzfunkenentladung und die Niederfrequenzfunkenentladung. Bei der Hochfrequenzentladung besteht die Möglichkeit eine Einzelelektrode, an die Hochspannung anliegt (> 15 kV) Korona absprühen zu lassen. Die unmittelbar in der Nähe befindlichen Gegenstände (unvulkanisierte Kautschukmischung) dienen als Auftrittsfläche dieser Gasentladung. Der Vorteil der Hochfrequenzfunkenentladung besteht darin, daß dieses Verfahren sehr effizient ist, da genau reguliert werden kann, wie groß die angelegte Spannung an der Elektrode ist, und damit die Koronabehandlung der unvulkanisierten Kautschukschicht auch energisch optimiert werden kann.

Im Gegensatz zur Hochfrequenzfunkenentladung (Bereiche um 25 KHz) arbeitet die Niederfrequenzfunkenentladung bei 50 bis 60 Hz. Durch eine quer zur Entladungsrichtung verlaufende Luftströmung wird das entladene Gas aus dem Elektrodenbereich herausgedrückt und somit kann dieses auf die zu behandelnde Oberfläche (Kautschukoberfläche) einwirken. Diese niederfrequente Entladung ist für das erfindungsgemäße Verfahren bevorzugt, da eine einfache Umsetzung aufgrund des geringeren apparativen Aufwandes erfolgen kann. An dieserStelle soll weiterhin auf die Literaturstelle 3. verwiesen werden.

Als Gasmedium soll vorzugsweise für die Plasmabehandlung Luft Verwendung finden. Aufgrund der einfachen Handhabung der damit verbundenen Vorrichtung kann unkompliziert die Oberfläche der unvulkanisierten Kautschukmaterialien behandelt werden. Vorstellbar wäre in diesem Zusammenhang, daß Sauerstoffbestandteile die unvulkanisierte Kautschukoberfläche polarisieren, was eine Ursache zur Erhöhung der Konfektionsklebrigkeit des Kautschuks sein könnte. Prinzipiell sind aber auch andere Gase denkbar, die in der Lage sind, die Oberfläche geeignet zu modifizieren. Da die meisten Kautschukmaterialien unpolarer Natur sind, erscheint es vorteilhaft, diese während der Plasmabehandlung mit polaren Bestandteilen zu versehen (Sauerstoff, Halogene). Um den Vulkanisationsprozess an der Oberfläche der Kautschukschicht positiv zu beeinflussen, ist es denkbar als Gas bzw. Gasgemisch auch schwefelenthaltende Substanzen zu verwenden.

Es besteht die Möglichkeit, die unvulkanisierte Kautschukmischung sofort einer Plasma- und/oder Flammenbehandlung zu unterziehen, wenn die Kautschukmischung den Extruder verläßt. In dieser Phase besteht die Möglichkeit, die langgestreckte Kautschukmischung flächendeckend zu behandeln, in dem am Extruderausgang, z.B. eine Niederfrequentfunkenentladungsvorrichtung geschaltet ist, so daß die ausgestoßene Kautschukschicht in einem einfachen Verfahrensschritt behandelt werden kann. Da die Klebrigkeit der behandelten Kautschukmischungen über längere Zeit erhalten bleibt, können diese Kautschukmischungsschichten gelagert werden und bedarfsgerecht verwendet werden. Demzufolge ist nur eine Behandlungsapparatur, nämlich z. B. am Extruderausgang erforderlich. Eine weitere Variante des Ortes der Kautschukmischungsbehandlung ist die, daß die Behandlungsvorrichtung, z.B. schwenkbar, an der Reifenaufbautrommel angebracht ist, so daß z.B. die Splicebereiche gezielt Plasma und/oder flammenbehandelt werden können.

Besonders bevorzugt ist, wenn die Plasma- und/oder Flammenbehandlung der Oberfläche der unvulkanisierten Kautschukmischung in der Art vorgenommen wird, daß die Oberflächenspannung der Kautschukmischung nach der Behandlung zwischen 40 und 70 mN/m, bevorzugt zwischen 50 und 60 m_N/m, beträgt. Dieser Bereich, der mit Hilfe von Testtinten der Firma Arcotec GmbH , Mönsheim, Deutschland, ermittelt wurde, hat sich als besonders günstig erwiesen.

Anhand eines Ausführungsbeispiels soll die Erfindung näher erläutert werden.

Mittels einer Niederfrequenz-Korona-Behandlungsanlage der Firma Arcotec Oberflächentechnik GmbH, nämlich der Arcojet PG 051, die Halbleitergenerator mit integriertem Transformator zur Hochspannungserzeugung sowie einen Elektrodenkopf zur Funkenentladung aufweist, kann das erfindungsgemäße Verfahren durchgeführt werden. Die Elektroden befinden sich in einem Tefloneinsatz eines Metallgehäuses, das mit dem Generator über einen flexiblen Schlauch für die Gebläseluft und einem flexiblen Schlauch für die hochspannungführenden Kabel fest verbunden ist.

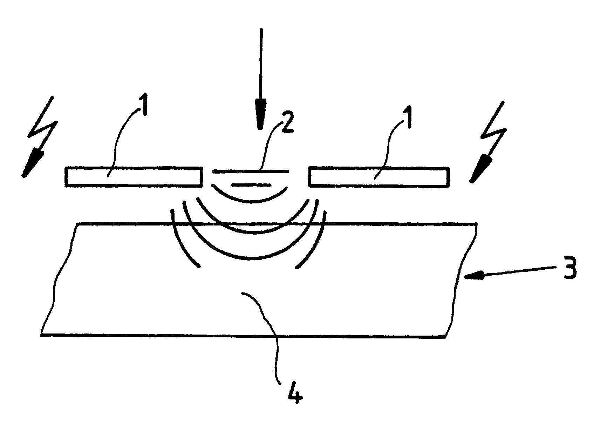

Die Anwendung dieser Vorrichtung wird schematisch in der Figur dargestellt. Der Elektrodenkopf, der die beiden Elektroden 1 aufweist, wird in einem Abstand von 4 bis 15 mm an die zu behandelnde unvulkanisierte Kautschukmischung 3, die z.B. aus einer Kieselsäure enthaltenden Laufstreifenmischung (Kautschukmischung enthält z.B. SBR, BR und NR) herangeführt, so daß auf die Oberfläche 4 die während der Zündung der Elektroden 1 entladenen Gasteilchen (Luftteilchen) 2 einwirken können. Die durch den Pfeil dargestellte Luftströmung bewirkt, daß die entladenen Teilchen aus dem Zwischenraum der Elektroden herausgetragen werden und auf die Kautschukoberfläche 4 auftreffen können. Die Behandlungszeit beträgt ca. 0,17 bis 0,3 Sec. Diese so behandelte Kautschukmischung ist in der Lage mit einer unbehandelten Kautschukoberfläche eine gute Adhäsion einzugehen. Prinzipiell ist es aber möglich, auch beide Kautschukoberflächen, die miteinander in Kontakt gebracht werden sollen, mit einem Plasma und/oder einer Flamme zu behandeln. Für die angegebene Anlage (Arcojet PG 051) sollte die Summe der Behandlungszeiten beider Kautschukoberflächen ca. < 0,6 Sec sein. Dieser Bereich ist vorteilhaft, da einerseits die Konfektionsklebrigkeit imunvulkanisierten Zustand ausreichend erhöht wird und gleichzeitig auch die Haltbarkeit im vulkanisierten Zustand zu einer anderen elastomeren Schicht optimal gegeben ist.

## Patentansprüche

1. Verfahren zur Herstellung eines Rohlings für Fahrzeugreifen, der durch Konfektionierung verschiedener Reifenaufbauteile aus unvulkanisierter Kautschukmischung erzeugt wird, wobei die Reifenaufbauteile z.T. eingebettete Festigkeitsträger aufweisen,
**dadurch gekennzeichnet,**
**daß** zur Erhöhung der Konfektionsklebrigkeit zumindest teilweise die Oberfläche zumindest einer unvulkanisierten Kautschukmischung plasma- und/oder flammenbehandelt wird und diese behandelte Oberfläche mit der Oberfläche zumindest eines Reifenaufbauteiles aus einer Kautschukmischung in Kontakt gebracht wird.

2. Verfahren zur Herstellung eines Rohlings für Fahrzeugreifen nach Anspruch 1, **dadurch gekennzeichnet, daß** zumindest der Teil der Oberfläche der unvulkanisierten Kautschukmischung plasma- und/oder flammenbehandelt wird, der den Endbereich der Kautschukmischung bildet, so daß bei einer Überlappung zweier Endbereiche zumindest eine behandelte Oberfläche mit der Oberfläche des anderen Endbereiches in Kontakt gebracht wird.

3. Verfahren zur Herstellung eines Rohlings für Fahrzeugreifen nach Anspruch 1 und/oder 2, **dadurch gekennzeichnet, daß** der Fahrzeugreifen ein Fahrzeugluftreifen ist, der zumindest folgende Bestandteile aufweist:
- eine gummierte Karkasse, die vom Zenitbereich des Reifens bis in die Wulstbereiche reicht,
- einen radial außen befindlichen Gummilaufstreifen und
- einem zwischen Laufstreifen und Karkasse angeordneten gummierten Gürtelpaket sowie
- einer radial innenliegenden Innenschicht und axial außen begrenzenden Seitenwänden aus Gummi.

4. Verfahren zur Herstellung eines Rohlings für Fahrzeugreifen nach Anspruch 3, **dadurch gekennzeichnet, daß** die Oberfläche der unvulkanisierten Kautschukmischung des Laufstreifens zumindest in den Teilen, die mit dem Restrohling in Berührung kommen und/oder im Stoßstellenbereich plasma- und/oder flammenbehandelt wird.

5. Verfahren zur Herstellung eines Rohlings für Fahrzeugreifen nach zumindest einem der vorhergehenden Ansprüche, **dadurch gekennzeichnet, daß** als Plasmabehandlung die Koronaentladung verwendet wird.

6. Verfahren zur Herstellung eines Rohlings für Fahrzeugreifen nach zumindest einem der vorhergehenden Ansprüche, **dadurch gekennzeichnet, daß** die Plasmaund/oder Flammenbehandlung der Oberfläche der unvulkanisierten Kautschukmischung unmittelbar nach dem Extrusionsvorgang erfolgt.

7. Verfahren zur Herstellung eines Rohlings für Fahrzeugreifen nach zumindest einem der vorhergehenden Ansprüche, **dadurch gekennzeichnet, daß** die Plasmaund/oder Flammenbehandlung der Oberfläche der unvulkanisierten Kautschukmischung während des Wickelprozesses an der Reifenaufbautrommel erfolgt.

8. Verfahren zur Herstellung eines Rohlings für Fahrzeugreifen nach zumindest einem der vorhergehenden Ansprüche, **dadurch gekennzeichnet, daß** die Plasmaund/oder Flammenbehandlung der Oberfläche der unvulkanisierten Kautschukmischung in der Art vorgenommen wird, daß die Oberflächenspannung der Kautschukmischung nach der Plasma- und/oder Flammenbehandlung zwischen 40 und 70 mN/m beträgt.

9. Rohling für die Erzeugung eines Fahrzeugreifens, der aus verschiedenen Reifenaufbauteilen aus unvulkanisierter Kautschukmischung erzeugt wird, wobei die Reifenaufbauteile z.T. eingebettete Festigkeitsträger aufweisen, **dadurch gekennzeichnet, daß** zumindest teilweise die Oberfläche zumindest einer unvulkanisierten Kautschukmischung plasma- und/oder flammenbehandelt ist und diese behandelte Oberfläche mit der Oberfläche zumindest eines Reifenaufbauteiles aus einer Kautschukmischung in Kontakt gebracht ist.

10. Rohling für die Erzeugung eines Fahrzeugreifens nach Anspruch 9, **dadurch gekennzeichnet, daß** zumindest der Teil der Oberfläche der unvulkanisierten Kautschukmischung plasma- und/oder flammenbehandelt ist, der den Endbereich der Kautschukmischung bildet, so daß bei einer Überlappung zweier Endbereiche zumindest eine behandelte Oberfläche mit der Oberfläche des anderen Endbereiches in Kontakt steht.

11. Rohling für die Erzeugung eines Fahrzeugreifens nach Anspruch 9 und/oder 10, **dadurch gekennzeichnet, daß** der Fahrzeugreifen ein Fahrzeugluftreifen ist, der zumindest folgende Bestandteile aufweist:
- eine gummierte Karkasse, die vom Zenitbereich des Reifens bis in die Wulstbereiche reicht,
- einen radial außen befindlichen Gummilaufstreifen und
- einem zwischen Laufstreifen und Karkasse angeordneten gummierten Gürtelpaket sowie
- einer radial innenliegenden Innenschicht und axial außen begrenzenden Seitenwänden aus Gummi.

12. Rohling für die Erzeugung eines Fahrzeugreifens nach Anspruch 11, **dadurch gekennzeichnet, daß** die Oberfläche des unvulkanisierten Laufstreifens zumindest in den Teilen, die mit dem Restrohling in Berührung kommen und/oder im Stoßstellenbereich plasma- und/oder flammenbehandelt ist.

13. Rohling für die Erzeugung eines Fahrzeugreifens nach Anspruch 12, **dadurch gekennzeichnet, daß** die unvulkanisierte Kautschukmischung des Laufstreifens als Füllstoff Kieselsäure enthält.

14. Fahrzeugreifen, bei dessen Herstellung ein Rohling nach zumindest einem der Ansprüche 9 bis 13 verwendet worden ist.

## Claims

1. Method of manufacturing a preform for vehicle tyres, which is produced by assembling various tyre components formed from an unvulcanised rubber mixture, the tyre components having partly embedded strengtheners,
**characterised in that**
in order to increase the assembly adhesiveness, the surface of at least one unvulcanised rubber mixture is at least partially plasma- and/or flame-treated and this treated surface is brought into contact with the surface of at least one tyre component formed from a rubber mixture.

2. Method of manufacturing a preform for vehicle tyres according to claim 1, **characterised in that** at least that portion of the surface of the unvulcanised rubber mixture is plasma- and/or flame-treated which forms the end region of the rubber mixture, such that, when two end regions overlap, at least one treated surface is brought into contact with the surface of the other end region.

3. Method of manufacturing a preform for vehicle tyres according to claim 1 and/or 2, **characterised in that** the vehicle tyre is a pneumatic vehicle tyre which has at least the following constituent parts:
- a rubber-coated carcase which extends from the crown region of the tyre into the bead regions,
- a rubber tread strip located radially on the outside and
- a rubber-coated belt package disposed between tread strip and carcase, as well as
- an inner layer lying radially on the inside and rubber side walls delimiting the tyre axially on the outside.

4. Method of manufacturing a preform for vehicle tyres according to claim 3, **characterised in that** the surface of the unvulcanised rubber mixture of the tread strip is plasma- and or flame-treated at least in those portions which come into contact with the rest of the preform and/or in the impact region.

5. Method of manufacturing a preform for vehicle tyres according to at least one of the preceding claims, **characterised in that** corona discharge is used as the plasma treatment.

6. Method of manufacturing a preform for vehicle tyres according to at least one of the preceding claims, **characterised in that** the plasma and/or flame treatment of the surface of the unvulcanised rubber mixture takes place immediately after the extrusion process.

7. Method of manufacturing a preform for vehicle tyres according to at least one of the preceding claims, **characterised in that** the plasma and/or flame treatment of the surface of the unvulcanised rubber mixture takes place during the winding process on the tyre assembly drum.

8. Method of manufacturing a preform for vehicle tyres according to at least one of the preceding claims, **characterised in that** the plasma and/or flame treatment of the surface of the unvulcanised rubber mixture is undertaken in such a way that the surface tension of the rubber mixture after the plasma and/or flame treatment is between 40 and 70 mN/m.

9. Preform for producing a vehicle tyre, which is produced from various tyre components formed from an unvulcanised rubber mixture, the tyre components having partly embedded strengtheners, **characterised in that** the surface of at least one unvulcanised rubber mixture is at least partially plasma- and/or flame-treated and this treated surface is brought into contact with the surface of at least one tyre component formed from a rubber mixture.

10. Preform for producing a vehicle tyre according to claim 9, **characterised in that** at least that portion of the surface of the unvulcanised rubber mixture is plasma- and/or flame-treated which forms the end region of the rubber mixture, such that, when two end regions overlap, at least one treated surface is in contact with the surface of the other end region.

11. Preform for producing a vehicle tyre according to claim 9 and/or 10, **characterised in that** the vehicle tyre is a pneumatic vehicle tyre which has at least the following constituent parts:
- a rubber-coated carcase which extends from the crown region of the tyre into the bead regions,
- a rubber tread strip located radially on the outside and
- a rubber-coated belt package disposed between tread strip and carcase, as well as
- an inner layer lying radially on the inside and rubber side walls delimiting the tyre axially on the outside.

12. Preform for producing a vehicle tyre according to claim 11, **characterised in that** the surface of the unvulcanised tread strip is plasma- and/or flame-treated at least in those portions which come into contact with the rest of the preform and/or in the impact region.

13. Preform for producing a vehicle tyre according to claim 12, **characterised in that** the unvulcanised rubber mixture contains silica as a filler.

14. Vehicle tyre, in the production of which a preform according to at least one of claims 9 to 13 has been used.

## Revendications

1. Procédé de fabrication d'une ébauche de bandage de véhicule qui est produit par confection de différents composants du pneumatique provenant d'un mélange de caoutchouc non vulcanisé, où les composants du bandage comprennent des nappes d'armature partiellement enrobées, **caractérisé en ce que**, pour augmenter l'adhésivité de confection, au moins partiellement la surface d'au moins un mélange de caoutchouc non vulcanisé est traitée au plasma et/ou à la flamme, et cette surface traitée est amenée en contact avec la surface'd'au moins un composant du bandage provenant d'un mélange de caoutchouc.

2. Procédé de fabrication d'une ébauche de bandage de véhicule selon la revendication 1, **caractérisé en ce que** au moins la partie de la surface du mélange de caoutchouc non vulcanisée, cette partie de la surface constituant la zone d'extrémité du mélange de caoutchouc, est traitée au plasma et/ou à la flamme de sorte que lors d'un chevauchement de deux zones d'extrémité, au moins une surface traitée est placée en contact avec la surface de l'autre zone d'extrémité.

3. Procédé de fabrication d'une ébauche de bandage de véhicule selon la revendication 1 et/ou 2, **caractérisé en ce que** le bandage du véhicule est un bandage qui comprend au moins les composants suivants :
- une carcasse caoutchoutée qui s'étend depuis la zone du sommet du bandage jusqu'à l'intérieur des zones des bourrelets,
- une bande de roulement en caoutchouc se trouvant à l'extérieur, en direction radiale, et
- un paquet de ceinture caoutchouté, disposé entre la bande de roulement et la carcasse,
- ainsi qu'une couche intérieure se trouvant à l'intérieur, en direction radiale, et des flancs en caoutchouc formant une limite extérieure en direction axiale.

4. Procédé de fabrication d'une ébauche de bandage de véhicule selon la revendication 3, **caractérisé en ce que** la surface du mélange de caoutchouc non vulcanisé de la bande de roulement, au moins dans les parties qui viennent en contact avec le reste l'ébauche, est traitée au plasma et/ou à la flamme et/ou dans la zone du joint.

5. Procédé de fabrication d'une ébauche de bandage de véhicule selon au moins l'une quelconque des revendications précédentes, **caractérisé en ce que** l'on utilise, comme traitement au plasma, la décharge par effet de couronne.

6. Procédé de fabrication d'une ébauche de bandage de véhicule selon au moins l'une quelconque des revendications précédentes, **caractérisé en ce que** le traitement au plasma et/ou à la flamme de la surface du mélange de caoutchouc non vulcanisé a lieu immédiatement après le processus d'extrusion.

7. Procédé de fabrication d'une ébauche de bandage de véhicule selon au moins l'une quelconque des revendications précédentes, **caractérisé en ce que** le traitement au plasma et/ou à la flamme de la surface du mélange de caoutchouc non vulcanisé a lieu pendant le processus d'enroulement sur le tambour de montage du pneumatique.

8. Procédé de fabrication d'une ébauche de bandage de véhicule selon au moins l'une quelconque des revendications précédentes, **caractérisé en ce que** le traitement au plasma et/ou à la flamme de la surface du mélange de caoutchouc non vulcanisé est effectué de manière telle que la tension superficielle du mélange de caoutchouc soit comprise entre 40 mN/m et 70 mN/m après le traitement au plasma et/ou à la flamme.

9. Ebauche pour la production d'un bandage de véhicule qui est produit à partir de plusieurs composants de bandage provenant d'un mélange en caoutchouc non vulcanisé, où les composants du bandage comprennent des nappes d'armature partiellement enrobées,
**caractérisée en ce que**, au moins partiellement, la surface d'au moins un mélange de caoutchouc non vulcanisé est traitée au plasma et/ou à la flamme, cette surface traitée étant placée en contact avec la surface d'au moins un composant du bandage provenant d'un mélange de caoutchouc.

10. Ebauche pour la production d'un bandage de véhicule selon la revendication 9, **caractérisée en ce que** au moins la partie de la surface du mélange de caoutchouc non vulcanisée est traitée au plasma et/ou à la flamme, cette partie de la surface constituant la zone d'extrémité du mélange de caoutchouc, de sorte que lors d'un chevauchement de deux zones d'extrémité, au moins une surface traitée est en contact avec la surface de l'autre zone d'extrémité.

11. Ebauche pour la production d'un bandage de véhicule selon la revendication 9 et/ou 10, **caractérisée en ce que** le bandage du véhicule est un bandage qui comprend au moins les composants suivants :
- une carcasse caoutchoutée qui s'étend depuis la zone du sommet du bandage jusqu'à l'intérieur des zones des bourrelets,
- une bande de roulement en caoutchouc se trouvant à l'extérieur, en direction radiale, et
- un paquet de ceinture caoutchouté, disposé entre la bande de roulement et la carcasse,
- ainsi qu'une couche intérieure se trouvant à l'intérieur, en direction radiale, et des flancs en caoutchouc formant une limite extérieure en direction axiale.

12. Ebauche pour la production d'un bandage de véhicule selon la revendication 11, **caractérisée en ce que** la surface de la bande de roulement non vulcanisée, au moins dans les parties qui viennent en contact avec le reste de l'ébauche, est traitée au plasma et/ou à la flamme et/ou dans la zone du joint.

13. Ebauche pour la production d'un bandage de véhicule selon la revendication 12, **caractérisée en ce que** le mélange de caoutchouc non vulcanisé de la bande de roulement contient, comme charge, de l'acide silique.

14. Bandage de véhicule lors de la fabrication duquel on utilise une ébauche selon au moins l'une quelconque des revendications 9 à 13.
